# EUROPEAN PATENT SPECIFICATION

(11) **EP 3 445 678 B1**
(45) Date of publication and mention of the grant of the patent: **11.06.2025**
(21) Application number: 17719889.2
(22) Date of filing: 20.04.2017
(51) Int. Cl.: B65G 1/04, A47F 7/30, B65G 1/10

(54) **APPARATUS FOR STORING BED FRAMES**
VORRICHTUNG ZUM LAGERUNG VON BETTGESTELLEN
APPAREIL POUR STOCKER DES CADRES DE LIT

(30) Priority: 22.04.2016 GB 201607048
(43) Date of publication of application: 27.02.2019
(73) Proprietor: Salisbury NHS Foundation Trust, Salisbury, Wiltshire SP2 8BJ (GB)
(72) Inventor: HILL, David John, Rumney Cardiff CF3 3AD (GB)
(74) Representative: Akers, Noel James
(86) International application number: PCT/GB2017/051103
(87) International publication number: WO 2017/182811

(56) References cited:
- EP-A1- 1 201 163
- EP-A1- 2 796 391
- WO-A1-01/79627
- WO-A1-2010/054942
- WO-A1-93/22531
- WO-A1-94/01642
- DE-A1- 19 542 169
- JP-A- 2004 256 218
- JP-U- S 544 705
- JP-U- S62 176 107
- US-A- 5 056 170

## Description

The invention relates to apparatus for storing bed frames.

In healthcare facilities, such as hospitals, it is commonplace to have to store bed frames while the bed frames are not being used. However, a hospital bed frame occupies a relatively large amount of floor space and if there are a number of bed frames that are not being used, finding adequate floor space to store the bed frames can be problematic.

European Patent Application N° 2796391 discloses a vertical storage system for storing bed frames. The system disclosed in this document uses a complicated arrangement of winches and pulleys and has a support frame enclosing and surrounding platforms for receiving bed frames. The support frame has four corner posts and the platforms engage with the four corner posts by means of guides which retain the platforms in position within the frame while they are suspended by four chains, one at each corner of the platforms.

The use of a frame and the winch and pulley arrangement limits the flexibility and configurability of the system disclosed in EP2796391 and requires four chains to suspend the platforms. In addition, the frame that surrounds the platforms occupies additional space and due to the presence of the support frame it is only possible to load bed frames onto the platforms from one end. Therefore, the storage system of EP2796391 is not suited to all storage locations.

WO 94/01642 discloses an apparatus for storing vehicles, the apparatus comprising:
a mounting device;
at least two vehicle supports, each vehicle support being mounted on the mounting device for movement between a loading position and a storage position, each vehicle support being adapted to receive a vehicle; and
drive meas mounted on the moutning device and adapted to move the vehicle supports between the loading position and the storage position;
wherein the mounting device is located on only one side of the vehicle supports; and
wherein each vehicle support comprises:
   two spaced apart carriage members, wherein the carriage members are movably mounted on the mounting device, and the carriage members of a vehicle support can be located within the carriage members of an adjacent vehicle support in the loading position;
   a cross-member connecting the carriage members; and
   a support platform adapted to be located under a vehicle, in use, and to receive the wheels of a vehicle, wherein the support platform is coupled to the carriage members.

In accordance with the invention, there is provided a bed frame storing apparatus according to claim 1.

Preferred embodiments of the invention are defined in the dependent claims.

Advantages of the invention include that by having the mounting device on only one side of the at least one bed supports helps to reduce the space occupied by the apparatus and/or improves access to the apparatus by enabling the apparatus to be configured to have bed frames loaded onto the at least one bed support either from a side or from the front.

Also described is a control unit for controlling operation of a number of apparatus for storing bed frames, the control unit comprising a processor; a selector device for selecting one of a number of apparatus to be operated, the selector device being coupled to the processor; a drive device coupled to the processor and to a motor on each of the apparatus for storing beds; and wherein the processor receives an input from the selector device indicating a selected apparatus to be operated and in response to the received input the processor outputs a first control signal to the drive device, and in response to the control signal, the drive device driving the motor associated with the selected apparatus.

Preferably, the control unit further comprises an activating device coupled to the processor, wherein the processor outputs the first control signal to the drive means when the processor receives an activation signal from the activation device.

The processor may output a second control signal to the drive means when the processor receives a stop signal from a stop device, and in response to the stop signal, the drive means stops driving the motor. The stop signal may be received from at least one of (i) a stop device on the control unit, (ii) a stop device remote from the control unit and the apparatus and (iii) a stop device on the apparatus.

An example of apparatus for storing bed frames in accordance with the invention will now be described with reference to the accompanying drawings, in which:
Figure 1 is a perspective view of a bed stacker for storing bed frames with bed supports in a first position;
Figure 2 is a perspective view of the bed stacker shown in Figure 1 with the bed supports in a second position;
Figure 3 shows the bed stacker of Figure 1 in an intermediate position and partly loaded with bed frames;
Figure 4 shows the bed stacker of Figure 1 in the second position and fully loaded with bed frames;
Figure 5 is a schematic block diagram of a control system for use with the bed stacker shown in Figures 1 to 4; and
Figure 6 is a control panel for use with the control system shown in Figure 5.

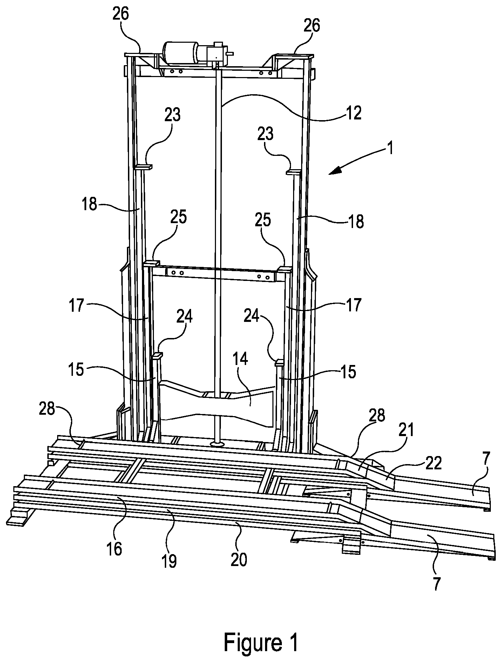

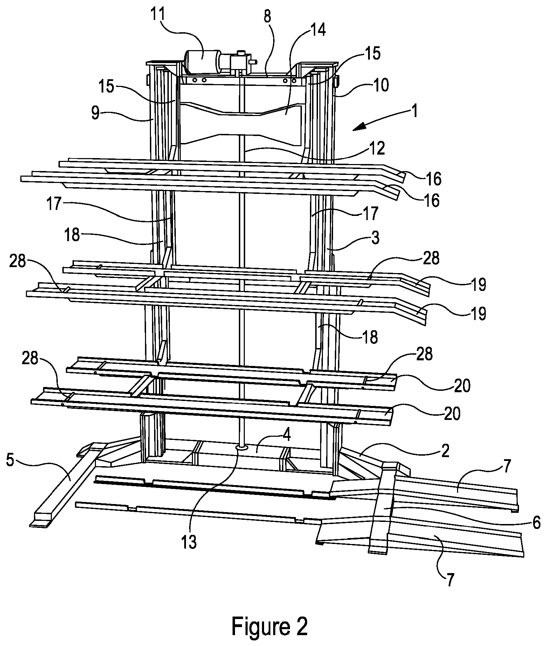

Figures 1 and 2 show a bed stacker 1 having a base 2 and upright support (or mounting device) 3 which extends vertically from the base 2. The base 2 has a central section 4. A first foot member 5 extends out from the central section 4 at right angles at one end and at the opposite end a second foot member 6 extends out from the base section 4 also at right angles and substantially parallel to the first foot member 5. The second foot member 6 includes two ramps 7 and a guide rail 29 is attached to each ramp 7. The guide rails 29 extend from the ramps 7 towards the first foot member 5. The support 3 includes two vertical uprights 9, 10 that extend vertically upwards from the central base section 4 of the base 2. An upper cross member 8 connects the two vertical uprights 9, 10. A motor 11 is mounted on the cross member 8 and a drive screw 12 extends downwardly from the motor 11 to a bearing 13 located in the central base section 4. The drive screw 12 is rotatably coupled to the motor 11 so that operation of the motor 11 rotates the drive screw 12.

Mounted on the drive screw 12 is a lifting member 14 which engages with the thread of the drive screw such that rotation of the drive screw 12 by the motor 11 causes the lifting member 14 to be raised or lowered depending on the direction of rotation of the drive screw 12 and of the motor 11. For example, the lifting member 14 may include a captive nut that is threaded onto the drive screw and is held captive in the lifting member 14 so that it cannot rotate with respect to the lifting member 14. Hence, rotation of the drive screw 12 will cause linear vertical movement of the lifting member 14.

Fixed to opposite ends of the lifting member 4 are two L-shaped bed support members 15. One upright leg of each L-shaped support member 15 is fixed to an end of the lifting member 14 and the other leg of the L-shaped support member 15 supports two bed platforms 16. Between the first L-shaped bed support members 15 and the vertical uprights 9, 10 are located two further pairs of L-shaped bed support members 17, 18. Each of the L-shaped bed support members 17, 18 are identical to the bed support members 15, except that the upright legs of the bed support member 17 is longer than the upright legs of the bed support members 15 and the upright legs of the bed support member 18 are longer than that of the bed support member 18.

As with the bed support members 15, the bed support members 17, 18 also each support two bed frame platforms 19, 20. The bed support platforms 19 are similar to the bed support platform 16 but are slightly longer so that, as shown in Figure1, the lower end of ramp sections 21 of the platforms 16 align with the top of ramp sections 22 of the platforms 19. The platforms 20 are similar to the platforms 19, except that they do not have the ramp sections 22. As shown in Figure 1, this enables the platforms 20 to locate under the platforms 19 with the lower the end of ramp sections 22 contacting the ramps 7.

Ridges 28 are positioned on the platforms 16, 19, 20 to retain bed frames 90 on the platforms 16, 19, 20 when the platforms 16, 19, 20 are in a raised position.

The upright legs of supports 18 are slideably mounted on the inside of the vertical support members 9, 10 by means of roller bearings (not shown), the upright legs of the supports 17 are slideably mounted on the inside of the upright legs of the support members 18 also by means or roller bearings (not shown) and the upright legs of the supports 15 are slideably mounted by means of roller bearings (not shown) on the inside of the upright legs of the supports 17. This enables the supports 15, 17, 18 to slideably move between a lowered (loading) position shown in Figure1 and a raised (storage) position shown in Figure 2. It should also be noted that the upper ends of the vertical sections of supports 17, 18 each have a flange 25, 23, respectively. Flanges 23 on the upper ends of the supports 18 overhang the upper ends of the supports 17 and the flanges 25 on the upper ends of the supports 17 overhang upper ends 24 of the supports 15.

Hence when the supports 15 are moved upwards they will slide relative to the supports 17 until the upper ends 24 contact the underside of the flanges 25 on the support 17. Further movement of the supports 15 upwards then moves both the supports 15 and the supports 17 upwards until the upper side of the flanges 25 on the supports 17 contact the underside of the flanges 23 on supports 18. Continued further movement of the supports 15 upwards will then cause all the supports 15, 17, 18 to slide upwards together relative to the support members 9, 10 until the upper sides of flanges 23 contact the underside of flanges 26 on the upper ends of the vertical supports 9, 10. In this position, the bed stacker 1 is in the position shown in Figure 2.

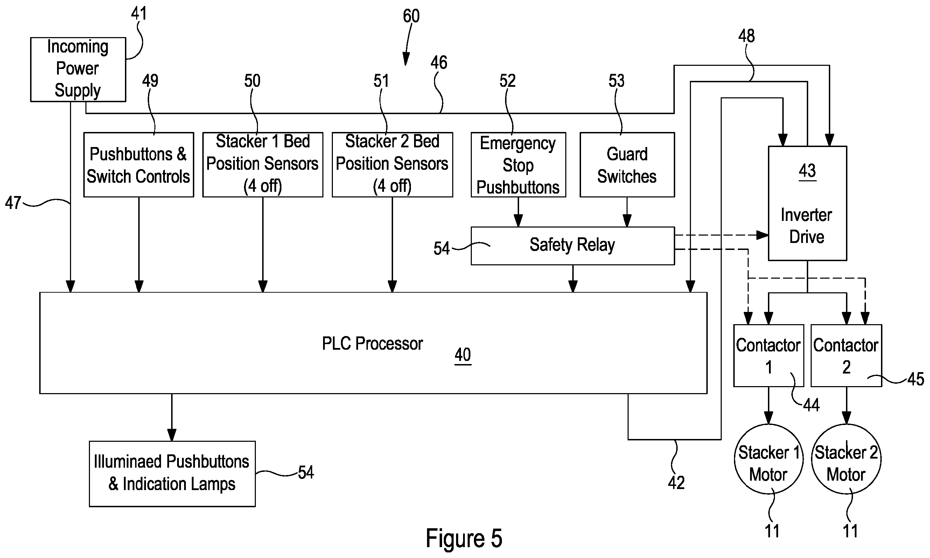

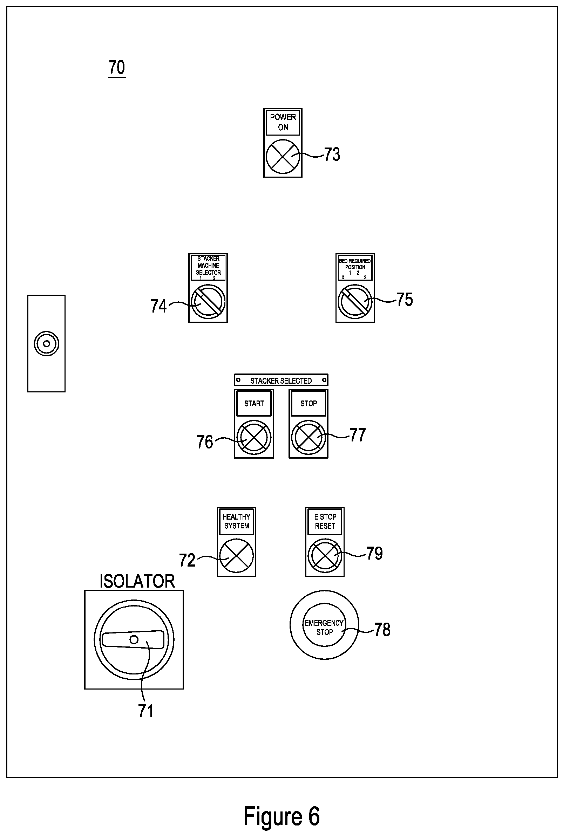

Figure 5 is a schematic block diagram showing a control system 60 for operating and controlling two bed stackers 1 and Figure 6 shows a control panel 70 for use with the control system 60.

The control system 60 includes a programmable logic controller (PLC) processor 40 that is powered by a power supply unit 41 and has an output 42 that controls an inverter drive 43. The power supply 41 is turned off and on by means of isolator switch 71 on the control panel 70.

The inverter drive 43 takes power from the power supply 41 on power supply line 46 and the processor 40 controls the supply of power to two contactors 44, 45. One contactor 44 drives the motor 11 on a first bed stacker 1 and the other contactor 45 drives the motor 11 on a second bed stacker 1. In addition, the processor 40 receives feedback on line 48 from the inverter drive 43. The logic of the processor 40 is such that only one of the contactors 44, 45 can be driven at any one time by the control system 60.

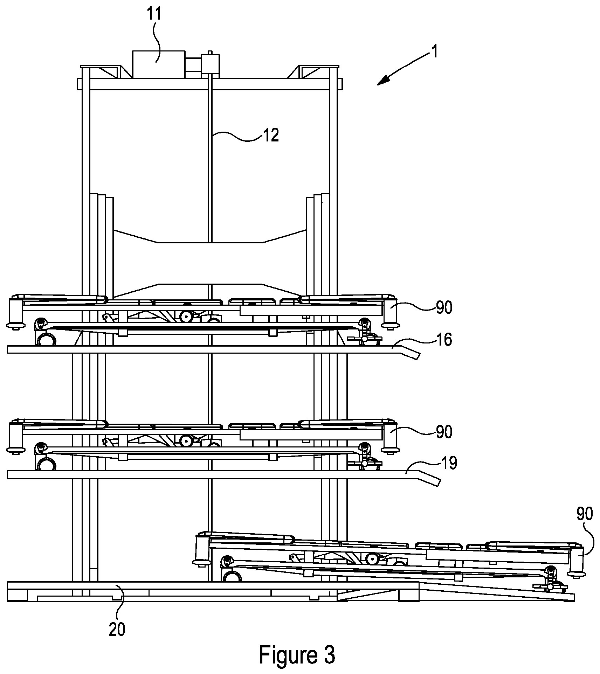

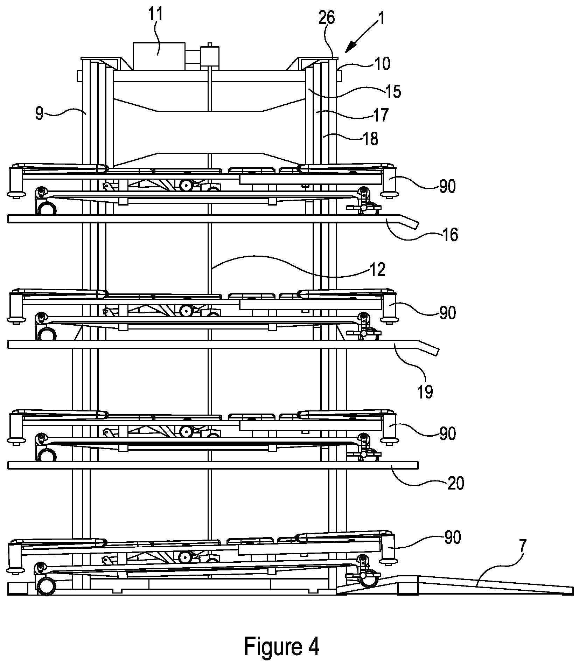

The processor 40 receives inputs from push buttons and switch controls 49. The push buttons and switch controls 49 are mainly located on the control panel 70. However, there could be other controls not located on the panel 70, such as an emergency stop push button that could be located in any suitable location for emergency stopping of the bed stackers 1. The switches 49 located on the control panel 70 include a selector switch 74 to select either the first or the second bed stacker 1, a bed selector switch 75 to select whether the ramps should be in the fully lowered position shown in Figure 1, the fully raised position shown in Figures 2 and 4 or either of the two intermediate positions where only the platforms 19, 20 are in the lowered position or where only platform 20 is the lowered position, as shown in Figure 3. The push buttons 49 located on the control panel 70 include start and stop push buttons 76, 77 to start and stop movement of the bed stacker 1 that has been selected to the position selected by switch 75, and an emergency stop reset push button 79.

The processor 40 also receives inputs from four sensors 50, 51 located on each bed stacker 1. The four sensors 50, 51 on each bed stacker 1 are located on flange 26, the underside of flange 23, the underside of flange 25 and on the bottom of the vertical leg of the support 15. These sensors 50, 51 indicate to the processor when the ramps are in the fully lowered position shown in Figure 1, when all the ramps are in the fully raised position shown in Figure 2 or when the ramps are in either of the two intermediate positions, as explained in more detail below. Therefore, the sensors 50, 51 that are on the bottom of the upright leg of the support 15 and on the flange 26 prevent the motor 11 and drive screw 12 overrunning after the supports 15, 17, 18 are in either the fully lowered position or the fully raised position.

In addition, there is also an emergency stop push button 52 and if the bed stackers 1 are located in a safety cage, guard switches 53 can be located on the gates of the safety cage to ensure that the gates are closed when the bed stackers 1 are being operated. The emergency stop push button 52 and the guard switches 53 are connected to the processor 40 through a safety relay 54. The safety relay 54 is also coupled directly to the inverter drive 43 and contactors 44, 45 so that in the event of an emergency (that is in the event of either the emergency stop push button 52 being activated or a guard switch being activated) the inverter drive 43 is stopped immediately by the safety relay and then the contactors 44, 45 are stopped by the relay 54 to stop the motors 11. The contactors 44, 45 are stopped shortly after the inverter drive 43 is stopped to minimise the risk of damage to the inverter drive 43 during an emergency stop situation. This could occur if the contactors 44, 45 are stopped before the inverter drive 43.

In addition, the processor 40 also has an output 54 to illuminate lamps on the push buttons 76, 77, 79 and indicator lamps 72, 73 so that an operator has a clear visual indication on the control panel 70 of the current operating status of the control unit 60 and the bed stackers 1.

Although the control system 60 and control panel 70 are designed to be used to control two bed stackers 1, they could be modified to control only one bed stacker 1 or to control more than two bed stackers 1. This could be done by (a) altering the switch 74 so that the number of switch positions corresponds to the number of bed stackers 1 to be operated and (b) modifying the control system to include a contactor for each bed stacker 1 to be operated. For more than two bed stackers, it would also be necessary to connect the sensors for each additional bed stacker 1 to the processor 40. It is also noted that if there is only one bed stacker to be controlled, switch 74 is not required.

In use, the power supply unit 41 is turned on by turning the isolator switch 71 on the control panel 70. This supplies power to the processor 40 and to the inverter drive 43 and illuminates the power on lamp 73. The inverter drive 43 does an internal self-check and feedbacks the result of this check to the processor 40 on line 48. The processor 40 also checks that the input from the safety relay 54 indicates that the emergency stop push buttons 52 are operating correctly and the guard switches 53 are closed. If feedback from the inverter drive 43 is positive and the processor 40 confirms that the emergency stop push buttons 52 are operating correctly and guard switches 53 are closed, the health indicator lamp 72 is then illuminated.

When both the lamps 72, 73 are illuminated, an operator then selects using the selector switch 74 which bed stacker 1 is to be operated. After selecting the bed stacker machine to be operated, the user then selects the appropriate bed position using switch 75. After selecting the bed position using switch 75, the user can then press start push button 76 which causes the processor 40 to illuminate the lamp on push button 76 and to operate the inverter drive 43 to drive the contactor 44, 45 corresponding to the bed stacker 1 selected by switch 74 to drive the corresponding motor 11. When the selected bed stacker 1 has moved to the position selected using the position selector switch 75, the operator can press the push button 77 to stop movement of the bed stacker and this causes the lamp on push button 77 to be illuminated and the lamp on push button 76 to be extinguished. Alternatively, the processor 40 will stop movement of the bed stacker 1 automatically when the processor 40 detects via the signals received from the sensors 50, 51 that the bed stacker is in the position selected on switch 75.

In the event that an operator has to stop the bed stacker 1 in an emergency, a red emergency stop push button 78 is pushed by the operator which causes the safety relay 54 to immediately stop the inverter drive 43 and to then stop the contactor 44, 45 that is being driven by the inverter 43. After the emergency stop button 78 has been pressed, the processor will illuminate the emergency stop reset push button 79. Before the bed stacker can be operated again, the reset switch 79 must be pressed by an operator to confirm that it is safe to continue operating the bed stacker 1.

To load beds onto the bed stacker 1, a bed frame 90 is collapsed to the configuration shown in Figure 3 and rolled onto ramp 7 and onto the first bed support platform 16. **If** there is a guard cage or other access controlled perimeter around the bed stacker 1, the operator must exit the enclosed area and close any access doors to close the guard switches 53. The user can then turn on the power supply using isolator switch 71, which illuminates the power on lamp 73. When the processor has received a positive confirmation from the inverter drive 43 that it is operational and the push button emergency stop switches 52 are operating correctly and the guard switches are closed, the processor 40 illuminates the indicator lamp 72 and the operator can select the bed stacker to be operated using switch 74 and then select position "1" using the position selector switch 75. When the operator presses the start button 76 the processor 40 receives this input and controls the inverter drive 43 to operate and drive the motor 11 corresponding to the bed stacker selected using the relevant contactor 44, 45. When the motor is operated, this turns the jack screw 12 which causes the member 14 to rise up the jack screw 12 and to move the support 15 upwards relative to the supports 17 until the upper end 24 of the support 15 contacts the underside of flange 25 triggers the sensor on the underside of the flange 25. When the processor 40 receives an input from the sensor, or the operator presses the stop button 77, the processor 40 stops the inverter drive 43 which stops the motor 11.

When the support 15 has been raised so that it contacts flange 25, another bed frame can be rolled onto the ramp 7 and onto the next bed frame platform 19. The operator can then move the position selector switch 75 to the next position "2", press the start switch, which restarts the motor 11 to raise the lifting member 14 higher so that both the supports 15 and 17 are moved upwards together until flange 25 contacts flange 23 activating the sensor on the flange 23. This indicates to the processor 40 to stop the inverter drive 43 and motor 11. In this position, bed stacker 1 with bed frames 90 on platforms 16, 19 is in the position shown in Figure 3 with both the bed frame platforms 16 and 19 raised and platform 20 still lowered. This enables a further bed frame 90 to be rolled onto the platform 20. An operator can then move the selector position switch to position "3" and then operate the bed stacker 1 as before to continue to raise the lifting member 14, and the support 15 together with the supports 17, 18 until the flange 23 contacts the flange 26 and the sensor on the flange 26 is activated to indicate to the processor that the bed stacker 1 is in the fully raised position. The processor 40 then switches off the inverter drive 43, thereby stopping the motor 11. This fully raised position is shown in Figures 2 and 4 and enables a fourth bed frame 90 to be rolled onto the ramp 7 and stored at floor level underneath the bed platforms 16, 19, 20 as shown in Figure 4. The fourth bed frame 90 stored at floor level is maintained in position by the guide rails 29.

In order to remove beds from the bed stacker 1 an operator reverses the procedure outlined above by first removing the lower most bed from the bed stacker (that is the bed at ground level) then turning the position switch from position "3" to position "2" operating the bed stacker to lower the platforms 16, 19, 20 until the platform 20 contacts the ramp 7. The bed stacker is then stopped and the bed frame 90 on the platform 20 can be wheeled off via the ramp 7. If the operator then selects position "1", the bed stacker can be lowered until the platform 19 contacts ramp 7 and bed frame 90 on the platform 19 wheeled off the platform. The last bed frame 90 can be removed by turning the position switch to the position "0" and operating the bed stacker 1 to lower platform 16 until it lies on top of platform 19 at which point the last bed frame 90 can be removed from the bed stacker 1.

When the bed stacker 1 is in the fully lowered position shown in Figure 1, the supports 15, 17, 18 are nested within each other and the platforms 16, 19, 20 fit on top of each other to create a compact arrangement.

Advantages of the bed stacker 1 are that it permits hospital bed frames to be stored more efficiently using vertical space in an area or room and because the bed stacker 1 has a support on only one side and the motor and drive gear are located on the support, space occupied by the bed stacker is minimised.

It also has the advantage of not using a complicated winch and pulley arrangement. In addition, depending on the space available, the ramps 7 can also be repositioned relatively easily so that bed frames can be rolled onto the ramp at platforms 16, 19, 20 from the front, opposite the support 3 if there is not sufficient space to roll the beds frames 90 onto the platforms 16, 19, 20 from the side. Also, by raising the height of the support 3 or by lowering it different numbers of beds supports and bed support platforms can be accommodated. Different sizes of bed frames can also be accommodated by changing the length of the vertical sections of the supports 15, 17, 18 and changing the length or width or separation of the platforms 16, 19, 20.

In addition, by nesting the supports 15, 17, 18 within each other and within the vertical supports 9, 10 facilitates a compact arrangement and by using the motor 11 and screw jack 12 to only directly raise the support 15 and then using the movement of the support 15 to cause movement of the supports 17 and 18 also contributes to the compact design of the bed stacker 1.

## Claims

1. Bed frame storing apparatus (1), the apparatus comprising a mounting device (3); a first bed support (18) and one or more further bed supports (15, 17); the first bed support (18) being mounted on the mounting device (3) for movement between a loading position and a storage position, each of the one or more further bed supports (15, 17) being mounted on the first bed support (18) or one of the one or more further bed supports (15, 17) for movement between a loading position and a storage position, each bed support (15, 17, 18) being adapted to receive a bed frame (90), each bed support (15, 17, 18) comprising two support members, the bed support members being adapted to be located under a bed frame (90), in use, wherein each bed support (15, 17, 18) comprises a support platform (16, 19, 20) adapted to receive ground engaging members of a bed frame (90), wherein each support platform (16, 19, 20) is mounted on the bed support members of the bed support (15, 17, 18), wherein each bed support (15, 17, 18) comprises two spaced apart upright members, each upright member being coupled to a bed support member, the upright members of the first bed support being movably mounted on the mounting device (3), wherein the spacing of the upright members of the or each further bed support (15, 17) is less than the spacing of the upright members of another bed support (15, 17, 18), such that the upright members of the or each further bed support (15, 17) are located inside the upright members of the other bed support (15, 17, 18), said first bed support (18) being the outermost bed support; drive means (11, 12) mounted on the mounting device (3) and adapted to move the bed supports (15, 17, 18) between the loading position and the storage position, in use; and wherein the mounting device is located on only one side of the bed supports (15, 17, 18).

2. Apparatus (1) according to claim 1, wherein the drive means (11, 12) is coupled to the innermost bed support (15) on only one side of the innermost bed support (15)

3. Apparatus (1) according to claim 1 or claim 2, wherein the drive means (11, 12) is coupled to the innermost bed support (15) by a single drive coupling (14).

4. Apparatus (1) according to any of the preceding claims, further comprising a loading device (7) adapted to permit a bed frame (90) to be located on each bed support (15, 17, 18) when one of the bed supports (15, 17, 18) is in the loading position; preferably wherein the loading device (7) comprises a ramp device.

5. Apparatus (1) according to any preceding claim, wherein each support platform (16, 19, 20) is adapted such that a bed frame (90) may be rolled onto the support platform (16, 19, 20).

6. Apparatus (1) according to any preceding claim, wherein the bed support members of each bed support (15,17,18) are located below the support platform (16,19, 20) of the bed support (15, 17, 18).

7. Apparatus (1) according to any preceding claim, wherein the mounting device (3) comprises two spaced apart upright mounting members, each upright member of the first bed support (18) being movably mounted on one of the upright mounting members.

8. Apparatus (1) according to any of the preceding claims, wherein each bed support (15, 17, 18) is linearly movable between the loading position and the storage position.

9. Apparatus (1) according to any of the preceding claims, wherein the drive means (11, 12) comprises a motor (11) and a screw device (12), the screw device (12) coupled to the motor (11) and to each bed support (15, 17, 18), and adapted to be rotated by the motor (11), in use; and wherein rotation of the screw device (12) moves bed supports (15, 17, 18) between the loading and the storage positions.

10. Apparatus (1) according to any preceding claim, wherein the or each further bed support (15, 17) is slidably mounted within the other bed support (15, 17, 18).

11. Apparatus according to claim 2, wherein movement of the innermost bed support (15) from the loading position to a first intermediate position moves only the first bed support (15) and movement of the innermost bed support (15) from the first intermediate position to a next intermediate position or the storage position moves the innermost bed support (15) and another bed support (17).

12. Apparatus according to claim 11, wherein the number of intermediate positions is equal to the number of bed supports minus 1.

## Patentansprüche

1. Bettgestellverstauanlage (1), wobei die Anlage ein Montagevorrichtung (3), einen ersten Bettträger (18) und einen oder mehrere weitere Bettträger (15, 17) umfasst; wobei der erste Bettträger (18) auf der Montiervorrichtung (3) für eine Bewegung zwischen einer Ladeposition und einer Verstauposition montiert ist, wobei jeder der ein oder mehreren weiteren Bettträger (15, 17) am ersten Bettträger (18) oder einem der ein oder mehreren weiteren Bettträger (15, 17) zur Bewegung zwischen einer Ladeposition und einer Verstauposition montiert ist, wobei jeder Bettträger (15, 17, 18) zum Aufnehmen eines Bettgestells (90) ausgelegt ist, wobei jeder Bettträger (15, 17, 18) zwei Trägerelemente umfasst, wobei die Bettträgerelemente so ausgelegt sind, dass sie sich beim Gebrauch unter einem Bettgestell (90) befinden, wobei jeder Bettträger (15, 17, 18) eine Trägerplattform (16, 19, 20) umfasst, die zum Aufnehmen von Bodenangriffselementen eines Bettgestells (90) ausgelegt ist, wobei jede Trägerplattform (16, 19, 20) an den Bettträgerelementen des Bettträgers (15, 17, 18) montiert ist, wobei jeder Bettträger (15, 17, 18) zwei voneinander beabstandete aufrechte Elemente umfasst, wobei jedes aufrechte Element mit einem Bettträgerelement gekoppelt ist, wobei die aufrechten Elemente des ersten Bettträgers beweglich an der Montiervorrichtung (3) montiert sind, wobei der Abstand der aufrechten Elemente des oder jedes weiteren Bettträgers (15, 17) geringer ist als der Abstand der aufrechten Elemente eines anderen Bettträgers (15, 17, 18), so dass sich die aufrechten Elemente des oder jedes weiteren Bettträgers (15, 17) innerhalb der aufrechten Elemente der anderen Bettträger (15, 17, 18) befinden, wobei der genannte erste Bettträger (18) der äußerste Bettträger ist;
ein Antriebsmittel (11, 12), das an der Montiervorrichtung (3) montiert und zum Bewegen der Bettträger (15, 17, 18) beim Gebrauch zwischen der Ladeposition und der Verstauposition ausgelegt ist; und wobei sich die Montiervorrichtung nur auf einer Seite der Bettträger (15, 17, 18) befindet.

2. Anlage (1) nach Anspruch 1, wobei das Antriebsmittel (11, 12) mit dem innersten Bettträger (15) auf nur einer Seite des innersten Bettträgers (15) gekoppelt ist.

3. Anlage (1) nach Anspruch 1 oder 2, wobei das Antriebsmittel (11, 12) mit dem innersten Bettträger (15) durch eine einzelne Antriebskupplung (14) gekoppelt ist.

4. Anlage (1) nach einem der vorherigen Ansprüche, die ferner eine Ladevorrichtung (7) umfasst, so ausgelegt, dass ein Bettgestell (90) auf jedem Bettträger (15, 17, 18) platziert werden kann, wenn sich einer der Bettträger (15, 17, 18) in der Ladeposition befindet; wobei die Ladevorrichtung (7) vorzugsweise eine Rampenvorrichtung umfasst.

5. Anlage (1) nach einem vorherigen Anspruch, wobei jede Trägerplattform (16, 19, 20) so ausgelegt ist, dass ein Bettgestell (90) auf die Trägerplattform (16, 19, 20) gerollt werden kann.

6. Anlage (1) nach einem vorherigen Anspruch, wobei sich die Bettträgerelemente jedes Bettträgers (15, 17, 18) unter der Trägerplattform (16, 19, 20) des Bettträgers (15, 17, 18) befinden.

7. Anlage (1) nach einem vorherigen Anspruch, wobei die Montagevorrichtung (3) zwei voneinander beabstandete aufrechte Montageelemente umfasst, wobei jedes aufrechte Element des ersten Bettträgers (18) beweglich an einem der aufrechten Montageelemente montiert ist.

8. Anlage (1) nach einem der vorherigen Ansprüche, wobei jeder Bettträger (15, 17, 18) linear zwischen der Ladeposition und der Verstauposition beweglich ist.

9. Anlage (1) nach einem der vorherigen Ansprüche, wobei das Antriebsmittel (11, 12) einen Motor (11) und eine Spindelvorrichtung (12) umfasst, wobei die Spindelvorrichtung (12) mit dem Motor (11) und mit jedem Bettträger (15, 17, 18) gekoppelt und zum Drehen durch den Motor beim Gebrauch ausgelegt ist; und wobei die Drehung der Spindelvorrichtung (12) die Bettträger (15, 17, 18) zwischen der Lade- und der Verstauposition bewegt.

10. Anlage (1) nach einem vorherigen Anspruch, wobei der oder jeder weitere Bettträger (15, 17) verschiebbar in dem anderen Bettträger (15, 17, 18) montiert ist.

11. Anlage nach Anspruch 2, wobei eine Bewegung des innersten Bettträgers (15) von der Ladeposition in eine erste Zwischenposition nur den ersten Bettträger (15) bewegt und eine Bewegung des innersten Bettträgers (15) von der ersten Zwischenposition in eine nächste Zwischenposition oder in die Verstauposition den innersten Bettträger (15) und einen anderen Bettträger (17) bewegt.

12. Anlage nach Anspruch 11, wobei die Anzahl von Zwischenpositionen gleich der Anzahl der Bettträger minus 1 ist.

## Revendications

1. Appareil de stockage de cadres de lit (1), l'appareil comprenant un dispositif de montage (3) ; un premier support de lit (18) et un ou plusieurs autres supports de lit (15, 17) ; le premier support de lit (18) étant monté sur le dispositif de montage (3) pour se déplacer entre une position de chargement et une position de stockage, chacun du ou des autres supports de lit (15, 17) étant monté sur le premier support de lit (18) ou sur l'un du ou des autres supports de lit (15, 17) pour se déplacer entre une position de chargement et une position de stockage, chaque support de lit (15, 17, 18) étant conçu pour recevoir un cadre de lit (90), chaque support de lit (15, 17, 18) comprenant deux éléments de support, les éléments de support de lit étant conçus pour être situés sous un cadre de lit (90), lors de l'utilisation, dans lequel chaque support de lit (15, 17, 18) comprend une plate-forme de support (16, 19, 20) conçue pour recevoir les éléments de contact avec le sol d'un cadre de lit (90), dans lequel chaque plate-forme de support (16, 19, 20) est montée sur les éléments de support de lit du support de lit (15, 17, 18), dans lequel chaque support de lit (15, 17, 18) comprend deux éléments verticaux espacés, chaque élément vertical étant accouplé à un élément de support de lit, les éléments verticaux du premier support de lit étant montés mobiles sur le dispositif de montage (3), dans lequel l'espacement des éléments verticaux de l'autre ou de chaque autre support de lit (15, 17) est inférieur à l'espacement des éléments verticaux d'un autre support de lit (15, 17, 18), de sorte que les éléments verticaux de l'autre ou de chaque autre support de lit (15, 17) sont situés à l'intérieur des éléments verticaux de l'autre support de lit (15, 17, 18), ledit premier support de lit (18) étant le support de lit le plus à l'extérieur ;
un moyen d'entraînement (11, 12) monté sur le dispositif de montage (3) et conçu pour déplacer les supports de lit (15, 17, 18) entre la position de chargement et la position de stockage, lors de l'utilisation ; et dans lequel le dispositif de montage est situé sur un seul côté des supports de lit (15, 17, 18).

2. Appareil (1) selon la revendication 1, dans lequel le moyen d'entraînement (11, 12) est accouplé au support de lit le plus à l'intérieur (15) sur un seul côté du support de lit le plus à l'intérieur (15).

3. Appareil (1) selon la revendication 1 ou la revendication 2, dans lequel le moyen d'entraînement (11, 12) est accouplé au support de lit le plus à l'intérieur (15) par un seul accouplement d'entraînement (14).

4. Appareil (1) selon l'une quelconque des revendications précédentes, comprenant en outre un dispositif de chargement (7) conçu pour permettre à un cadre de lit (90) d'être placé sur chaque support de lit (15, 17, 18) lorsque l'un des supports de lit (15, 17, 18) est dans la position de chargement ; de préférence, dans lequel le dispositif de chargement (7) comprend un dispositif de rampe.

5. Appareil (1) selon l'une quelconque revendication précédente, dans lequel chaque plate-forme de support (16, 19, 20) est conçue pour qu'un cadre de lit (90) puisse rouler sur la plate-forme de support (16, 19, 20).

6. Appareil (1) selon l'une quelconque revendication précédente, dans lequel les éléments de support de lit de chaque support de lit (15, 17, 18) sont situés sous la plate-forme de support (16, 19, 20) du support de lit (15, 17, 18).

7. Appareil (1) selon l'une quelconque revendication précédente, dans lequel le dispositif de montage (3) comprend deux éléments de montage verticaux espacés, chaque élément vertical du premier support de lit (18) étant monté mobile sur l'un des éléments de montage verticaux.

8. Appareil (1) selon l'une quelconque des revendications précédentes, dans lequel chaque support de lit (15, 17, 18) est mobile linéairement entre la position de chargement et la position de stockage.

9. Appareil (1) selon l'une quelconque des revendications précédentes, dans lequel le moyen d'entraînement (11, 12) comprend un moteur (11) et un dispositif à vis (12), le dispositif à vis (12) étant accouplé au moteur (11) et à chaque support de lit (15, 17, 18), et conçu pour être mis en rotation par le moteur (11), lors de l'utilisation ; et dans lequel la rotation du dispositif à vis (12) déplace les supports de lit (15, 17, 18) entre les positions de chargement et de stockage.

10. Appareil (1) selon l'une quelconque revendication précédente, dans lequel l'autre ou chaque autre support de lit (15, 17) est monté coulissant dans l'autre support de lit (15, 17, 18).

11. Appareil selon la revendication 2, dans lequel le déplacement du support de lit le plus à l'intérieur (15) de la position de chargement à une première position intermédiaire déplace uniquement le premier support de lit (15) et le déplacement du support de lit le plus à l'intérieur (15) de la première position intermédiaire à une position intermédiaire suivante ou à la position de stockage déplace le support de lit le plus à l'intérieur (15) et un autre support de lit (17).

12. Appareil selon la revendication 11, dans lequel le nombre de positions intermédiaires est égal au nombre de supports de lit moins 1.
